# EUROPÄISCHE PATENTANMELDUNG

(11) **EP 4 383 360 A1**
(43) Veröffentlichungstag der Anmeldung: **12.06.2024**
(21) Anmeldenummer: 22212533.8
(22) Anmeldetag: 09.12.2022
(51) Int. Cl.: H01M 4/04, H01M 4/139

(54) **VORRICHTUNG UND VERFAHREN ZUR TROCKNUNG EINES ELEKTRODENMATERIALS EINER BATTERIEZELLENHERSTELLUNG**

(71) Anmelder: Siemens Aktiengesellschaft, 80333 München (DE)
(72) Erfinder: Schulte, Sascha, 91315 Höchstadt (DE)
(74) Vertreter: Siemens Patent Attorneys

(57) **Zusammenfassung**

Es wird eine Vorrichtung (1), umfassend eine Steuereinheit (3) zur Steuerung einer Trocknung eines Elektrodenmaterials (5) einer Batteriezellenherstellung bereitgestellt, die dadurch gekennzeichnet ist, dass die Steuereinheit (3) dazu ausgebildet ist, eine durch eine Messeinheit (2) erfasste räumliche Feuchtigkeitsverteilung des Elektrodenmaterials (5) zu empfangen, und basierend auf der Feuchtigkeitsverteilung eine zur Trocknung vorgesehene Lasertrocknung (4) derart räumlich variabel zu steuern, dass ihre zur Trocknung vorgesehene Leistung basierend auf der erfassten Feuchtigkeitsverteilung räumlich variiert.

Weiterhin betrifft die Erfindung ein Verfahren zur Trocknung eines Elektrodenmaterials (5) einer Batterieherstellung.

## Beschreibung

Die Erfindung betrifft eine Vorrichtung gemäß dem Oberbegriff des Patentanspruches 1 sowie ein Verfahren gemäß dem Oberbegriff des Patentanspruches 8.

Bei einer Produktion beziehungsweise Herstellung von Batteriezellen (Batteriezellenherstellung) werden die herzustellenden Elektroden zunächst auf langen Bahnen mit einem Elektrodenmaterial beschichtet. Hierbei erfolgt das Beschichten typischerweise mittels des Auftragens einer Elektrodenpaste auf einer Metallfolie, die beispielsweise Grafit, Bindemittel, Lösemittel und/oder weitere Bestandteile umfasst.

Nach dem Auftragen der Elektrodenpaste auf die Metallfolie ist eine Trocknung der Elektrodenpaste erforderlich. Das ist deshalb erforderlich, damit sich eine feste sowie teilflexible Beschichtungsfläche ausbildet. Typischerweise weist die Beschichtung eine Beschichtungsdicke von 50 Mikrometern bis 250 Mikrometern auf. Die Metallfolie weist typischerweise lediglich eine Dicke von einigen 10 Mikrometern auf.

Die genannte Trocknung beziehungsweise der genannte Trocknungsschritt erfordert große Energiemengen und, besonders bei einer industriellen Fertigung, große Aufbauten. Bei industrieüblichen Produktionsanlagen werden die nass beschichteten Folien mit bis zu 80 Meter pro Minute beschichtet. Die Trocknung mit Konvektionsöfen und/oder Heizstrahlern dauert in etwa eine Minute, sodass ein etwa 80 Meter langer Trocknungsofen erforderlich wäre.

Innerhalb von als Ofen ausgebildeten Trocknungseinheiten wird die Elektrodenpaste mit Konvektion oder Heizstrahlern bei Temperaturen im Bereich von etwa 100 Grad Celsius bis 200 Grad Celsius getrocknet. Es ist eine bestimmte Zeit erforderlich, um die Restfeuchte, beispielsweise von Lösemitteln, aus den tieferen Ebenen der Beschichtung zur Oberfläche und zu ihrer Verdampfung zu transportieren.

Weiterhin ist es bekannt das Elektrodenmaterial mittels einer Lasertrocknung zu trocknen. Hierbei wird der zu trocknende Bereich großflächig mit einem Hochleistungslaser bestrahlt, sodass lediglich auf der zu trocknenden Fläche die zur Trocknung erforderliche Wärmeenergie in das Elektrodenmaterial eingebracht wird. Das Lasertrocknungsverfahren weist den Vorteil eines deutlich reduzierten Energiebedarfs (um bis zu 80 %) sowie einer deutlich reduzierten Trocknungsdauer auf.

Der vorliegenden Erfindung liegt die Aufgabe zugrunde, eine Lasertrocknung innerhalb einer Batteriezellenherstellung zu verbessern.

Die Aufgabe wird durch eine Vorrichtung mit den Merkmalen des unabhängigen Patentanspruches 1 sowie durch ein Verfahren mit den Merkmalen des unabhängigen Patentanspruches 8 gelöst. In den abhängigen Patentansprüchen sind vorteilhafte Ausgestaltungen und Weiterbildungen der Erfindung angegeben.

Die erfindungsgemäße Vorrichtung umfasst wenigstens eine Steuereinheit zur Steuerung einer Trocknung eines Elektrodenmaterials, insbesondere einer Elektrodenbeschichtung, einer Batteriezellenherstellung und ist dadurch gekennzeichnet, dass die Steuereinheit dazu ausgebildet ist, eine durch eine Messeinheit erfasste räumliche Feuchtigkeitsverteilung des Elektrodenmaterials zu empfangen, und basierend auf der Feuchtigkeitsverteilung eine zur Trocknung vorgesehene Lasertrocknung derart räumlich variabel zu steuern, dass ihre zur Trocknung vorgesehene Leistung basierend auf der erfassten Feuchtigkeitsverteilung räumlich variiert.

Eine Trocknung im Sinne der vorliegenden Erfindung kann eine wenigstens teilweise Reduzierung der Feuchtigkeit wenigstens eines Teilbereichs des Elektrodenmaterials sein. Hierbei kann die Feuchtigkeit auf einen festgelegten Sollwert reduziert werden. Eine nahezu vollständige beziehungsweise vollständige Trocknung des Elektrodenmaterials kann ebenfalls vorgesehen sein.

Als Maß für die Feuchtigkeit kann die Materialfeuchte, insbesondere der Wassergehalt, der Wasseranteil, der volumenbezogene Feuchtegehalt, der volumenbezogene Feuchteanteil und/oder der Trockenmassenanteil herangezogen werden.

Eine Feuchtigkeitsverteilung ist beispielsweise eine über eine Oberfläche des Elektrodenmaterials räumlich variierende Feuchtigkeit. Mit anderen Worten ist eine Feuchtigkeitsverteilung durch eine räumlich beziehungsweise örtlich aufgelöste Feuchtigkeitsmessung ermittelbar. Eine Feuchtigkeitsverteilung weist somit für verschiedene räumliche Bereiche des Elektrodenmaterials jeweils einen Feuchtigkeitswert auf.

Unter dem Begriff der Steuerung kann ebenfalls eine Regelung verstanden werden. Mit anderen Worten kann die Steuereinheit ebenfalls als Regeleinheit ausgebildet sein, die dazu ausgebildet ist, die Lasertrocknung entsprechend zu regeln.

Gemäß der vorliegenden Erfindung ist die Steuereinheit dazu ausgebildet, eine durch eine Messeinheit erfasste räumliche Feuchtigkeitsverteilung des Elektrodenmaterials zu empfangen, derart zu analysieren, derart zu bearbeiten und/oder derart für die Steuerung zu verwenden, dass mittels der Lasertrocknungseinheit eine ortsaufgelöste feuchtigkeitsabhängige Trocknung erfolgt.

Mit anderen Worten stellt die Messeinheit für die Steuerung der Trocknung durch die Steuereinheit eine Feuchtigkeitsverteilung wenigstens eines Teilbereiches, insbesondere eines Oberflächenteilbereiches, des Elektrodenmaterials bereit. Die Messeinheit ist hierbei dazu ausgebildet, eine räumlich aufgelöste Feuchtigkeitsmessung beziehungsweise Feuchtigkeitsermittlung durchzuführen. Hierbei kann die Feuchtigkeit jedes Oberflächenbereiches, beispielsweise bei Verwendung eines räumlichen Rasters von jedem Rasterelement des Rasters, durch bekannte indirekte Feuchtemessverfahren, insbesondere Infrarotreflexion/-absorption, ermittelt werden. Durch die Ermittlung beziehungsweise Erfassung von Feuchtigkeitsmesswerten mehrerer Oberflächenteilbereiche, beispielsweise mehrerer Rasterelemente des Rasters, wird das Erfassen der Feuchtigkeit somit ortsaufgelöst.

Erfindungsgemäß ist die Steuereinheit beziehungsweise die Steuerung derart ausgebildet, dass basierend auf der Feuchtigkeitsverteilung eine zur Trocknung vorgesehene Lasertrocknung derart räumlich variabel gesteuert wird, dass ihre zur Trocknung vorgesehene Leistung basierend auf der empfangenen Feuchtigkeitsverteilung räumlich variiert. Hierbei kann das Empfangen nur das Bereitstellen der Feuchtigkeitsverteilung für die Steuereinheit bedeuten, das heißt, dass die Steuereinheit wenigstens in Kenntnis der erfassten Feuchtigkeitsverteilung ist.

Mit anderen Worten erfolgt basierend auf der räumlichen Variation der erfassten Feuchtigkeitsverteilung eine angepasste räumliche Variation der Leistung der Lasertrocknung. Dadurch wird eine räumliche beziehungsweise ortsaufgelöste Trocknung des Elektrodenmaterials ermöglicht. Hierbei dient als Grundlage der Steuerung und somit für die im jeweiligen Flächenabschnitt des Elektrodenmaterials eingebrachte Wärmeenergie die im jeweiligen Flächenabschnitt erfasste Feuchtigkeit. Bei einer erhöhten Feuchtigkeit wird die Leistung der Lasertrocknung bevorzugt erhöht während bei einer geringeren Feuchtigkeit die Leistung der Lasertrocknung verringert wird. Somit ist die jeweilige Leistung und somit die jeweilige eingebrachte Wärmeenergie erfindungsgemäß an die jeweilige im Elektrodenmaterial vor Ort vorhandene Feuchtigkeit angepasst.

Ein Vorteil der vorliegenden Erfindung ist, dass durch die in Abhängigkeit der örtlichen Feuchtigkeit ortsaufgelöste Lasertrocknung der Energiebedarf der Trocknung weiter reduziert werden kann. Das ist deshalb der Fall, da in Bereichen beziehungsweise an Stellen geringerer Feuchtigkeit weniger Leistung und somit weniger Energie zur Trocknung erforderlich ist.

Ein weiterer Vorteil der vorliegenden Erfindung gegenüber aus dem Stand der Technik bekannten großflächigen Lasertrocknungen ist, dass in Bereichen mit etwas trockener Beschichtung vermieden wird, dass nach Abschluss des Trocknungsvorgangs weiter Wärmeenergie durch die Lasertrocknung in das bereits getrocknete Elektrodenmaterial eingebracht wird. Dadurch kann eine thermische Schädigung des Elektrodenmaterials durch einen zu großen Eintrag von Wärmeenergie verhindert werden.

Das erfindungsgemäße Verfahren zur Trocknung eines Elektrodenmaterials einer Batterieherstellung, ist gekennzeichnet dadurch, dass hierbei eine Vorrichtung gemäß der vorliegenden Erfindung und/oder einer ihrer Ausgestaltungen verwendet wird, wobei das Verfahren wenigstens die folgenden Schritte umfasst:
- Erfassen einer räumlichen Feuchtigkeitsverteilung des Elektrodenmaterials mittels der Messeinheit; und
- Steuern der Lasertrocknung mittels der Steuereinheit, wobei das Steuern derart erfolgt, dass die zur Trocknung vorgesehene Lasertrocknung basierend auf der erfassten Feuchtigkeitsverteilung räumlich variiert wird.

Es ergeben sich zur erfindungsgemäßen Vorrichtung gleichartige, gleichwertige und gleichwirkende Vorteile und/oder Ausgestaltungen des erfindungsgemäßen Verfahrens.

Gemäß einer vorteilhaften Ausgestaltung der Erfindung umfasst die Vorrichtung die Messeinheit zur Erfassung der räumlichen Feuchtigkeitsverteilung des Elektrodenmaterials und die Lasertrocknungseinheit zur räumlich variablen Trocknung des Elektrodenmaterials.

Dadurch wird insbesondere für eine Batteriezellenherstellung eine vorteilhafte Trocknungsvorrichtung beziehungsweise Trocknungsanlage bereitgestellt.

In einer vorteilhaften Weiterbildung der Erfindung ist die Messeinheit dazu ausgebildet, die räumliche Feuchtigkeitsverteilung gemäß einem zweidimensionalen Raster zu erfassen.

Mit anderen Worten wird die räumliche Feuchtigkeitsverteilung gemäß einem zweidimensionalen Raster erfasst. Beispielsweise wird hierzu ein Teilbereich der Oberfläche des Elektrodenmaterials beziehungsweise der Elektrodenbeschichtung in ein zweidimensionales räumliches Raster eingeteilt. Für jedes Rasterelement (Pixel) des Rasters wird die Feuchtigkeit beziehungsweise ein Feuchtigkeitsmesswert mittels der Messeinheit erfasst.

Mit anderen Worten ist jedem Rasterelement des Rasters ein Feuchtigkeitswert zugeordnet, wodurch eine Feuchtigkeitsverteilung bereitgestellt wird. Gemäß dem erfassten Feuchtigkeitswert eines Rasterelements wird die Leistung der Lasertrocknung für dieses Rasterelement durch die Steuereinheit, beispielsweise in Form eines Sollwertes, ermittelt und an die Lasertrocknungseinheit übermittelt. Dadurch wird die Leistung eines Lasers der Lasertrocknungseinheit für jedes Rasterelement eingestellt, wobei zur Ermittlung der jeweiligen Sollwerte der Laserleistung, die für das jeweilige Rasterelement erfasste Feuchtigkeit herangezogen wird. Mit anderen Worten wird durch die Steuereinheit die Leistung der Lasertrocknung über den Oberflächenbereich des Elektrodenmaterials gemäß des verwendeten räumlichen Rasters in Abhängigkeit des jeweiligen erfassten Feuchtigkeitswertes eingestellt.

Bevorzugt sind die Rasterelemente des Rasters rechteckig, insbesondere quadratisch, ausgebildet und weisen eine Länge im Bereich von 0,1 Millimetern bis 1,0 Millimetern auf.

Gemäß einer vorteilhaften Ausgestaltung der Erfindung ist die Messeinheit dazu ausgebildet, die räumliche Feuchtigkeitsverteilung mittels einer Hyperspektralanalyse (englisch: Hyperspectral Imaging) zu erfassen.

Mit anderen Worten wird die räumliche Feuchtigkeitsverteilung mittels einer Hyperspektralanalyse erfasst.

Hierbei werden mehrere Wellenlängen verwendet, wobei für jeden Pixel ein entsprechendes Spektrum erfasst wird. Basierend auf dem erfassten Spektrum wird die im Pixel vorhandene Feuchtigkeit ermittelt. Dadurch wird eine vorteilhafte Erfassung der (Rest-)Feuchteverteilung bereitgestellt.

Bevorzugt werden bei der Hyperspektralanalyse mehrere Wellenlängen im Infrarotbereich, insbesondere im nahen Infrarotbereich (englisch: Near-Infrared Spectroscopy), verwendet.

In einer vorteilhaften Weiterbildung der Erfindung ist die Vorrichtung zur Trocknung einer Elektrodenbeschichtung einer Batteriezellenherstellung, insbesondere zur Trocknung einer Elektrodenpaste, vorgesehen.

Mit anderen Worten wird die Vorrichtung bevorzugt zur Trocknung einer Elektrodenbeschichtung einer Batteriezellenherstellung verwendet. Dadurch wird vorteilhafterweise eine räumliche kompaktere sowie eine energiesparendere Trocknungsanlage für eine Batteriezellenherstellung bereitgestellt.

Gemäß einer vorteilhaften Ausgestaltung der Erfindung ist die Wellenlänge eines Lasers der Lasertrocknung in Abhängigkeit des Elektrodenmaterials einstellbar.

Mit anderen Worten ist bevorzugt die Wellenlänge beziehungsweise sind bevorzugt die Wellenlängen des Lasers der Trocknungsanlage in Abhängigkeit der Elektrodenmaterials einstellbar. Hierbei kann die Einstellung durch die Steuereinheit erfolgen. Dadurch kann die Wellenlänge und somit der Wärmeeintrag in Abhängigkeit des Elektrodenmaterials optimiert werden. Mit anderen Worten weist das Elektrodenmaterial bestimmte Absorptionslinien/banden auf, sodass ein darauf abgestimmter Laser zu einem effizienteren Wärmeeintrag und somit zu einer energetisch effizienteren Trocknung führt. Alternativ oder ergänzend kann die Wellenlänge der Lasertrocknung auf die Resonanzfrequenzen von Wasser eingestellt sein.

In einer vorteilhaften Weiterbildung der Erfindung erfolgt vor der Lasertrocknung eine Vortrocknung des Elektrodenmaterials auf eine festgelegte Restfeuchtigkeit, beispielsweise auf eine Restfeuchtigkeit von 90 Prozent.

Mit anderen Worten wird zunächst eine unvollständige Trocknung durchgeführt. Somit dient die anschließende Lasertrocknung zur Trocknung der räumlich variierenden Restfeuchtigkeit. Hierbei wird vorab eine bekannte Trocknung, beispielsweise eine bekannte nicht ortsaufgelöste, das heißt flächige Lasertrocknung, durchgeführt. Dadurch kann vorteilhafterweise die größte Feuchtigkeit vorab der dann feineren ortsaufgelösten Lasertrocknung aus dem Elektrodenmaterial entfernt werden. Hierbei wird erfindungsgemäß somit eine Restfeuchtigkeitsverteilung als Feuchtigkeitsverteilung erfasst. Das genannte Verfahren weist zudem den Vorteil auf, dass die räumliche Variation der Restfeuchte besser messbar ist, da vorab das Material gegebenenfalls mit Feuchtigkeit gesättigt war.

Gemäß einer vorteilhaften Ausgestaltung der Erfindung erfolgen das Erfassen der Feuchtigkeitsverteilung und die anschließende Lasertrocknung mehrfach abwechselnd hintereinander.

Dadurch bildet sich eine Kombination aus Messung und darauffolgender gesteuerter Trocknung aus. Diese Abfolge kann so oft wiederholt werden, bis eine festgelegte Genauigkeit beziehungsweise eine festgelegte Minimalrestfeuchte erreicht wurde. Ein weiterer Vorteil der genannten stufenweisen Trocknung ist, dass dadurch eine sanftere Trocknung des Elektrodenmaterials erfolgt.

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert eine Vorrichtung gemäß einer Ausgestaltung der vorliegenden Erfindung.

Gleichartige, gleichwertige oder gleichwirkende Elemente können in der Figur mit denselben Bezugszeichen versehen sein.

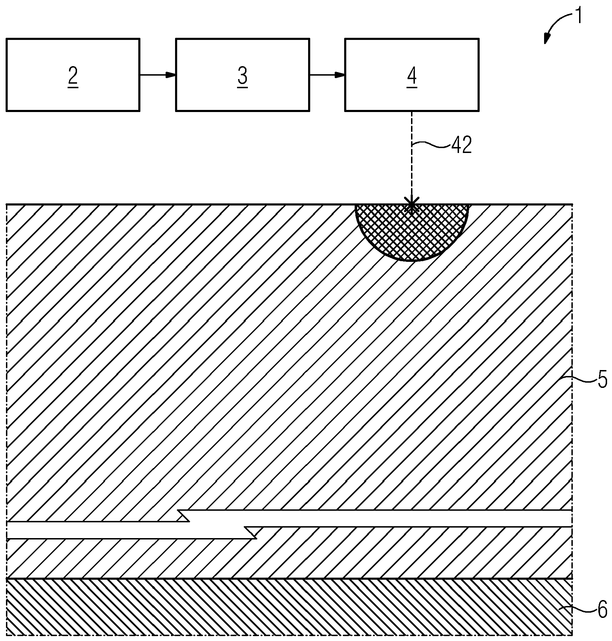

Die Figur 1 zeigt eine Vorrichtung 1 gemäß einer Ausgestaltung der vorliegenden Erfindung.

Die Vorrichtung 1 dient gemäß dem vorliegenden Ausführungsbeispiel einer wenigstens teilweisen Trocknung einer Elektrodenbeschichtung 5 einer Batteriezellenherstellung. Hierbei ist die Elektrodenbeschichtung in Form einer Paste auf einem Stromsammler 6 aufgebracht.

Die Vorrichtung 1 umfasst eine Messeinheit 2, eine Steuereinheit 3 sowie eine Lasertrocknungseinheit 4.

Die Messeinheit 2 ist als ortsaufgelöste Feuchtemessvorrichtung ausgebildet. Dadurch ist die Messeinheit 2 dazu ausgebildet, eine räumlich aufgelöste Feuchtigkeitsverteilung, insbesondere eine gemäß der Oberfläche des Elektrodenmaterials 5 zweidimensionale Feuchtigkeitsverteilung, zu ermitteln.

Die Steuereinheit 3 ist zur Steuerung der Lasertrocknungseinheit 4 ausgebildet. Beispielsweise ermittelt hierzu die Steuereinheit 3 Sollwerte einer Laserleistung der Lasertrocknungseinheit 4, die dem Betrieb der Lasertrocknung 4 zugrunde gelegt werden.

Die Lasertrocknungseinheit 4 ist zu einer ortsabhängigen Trocknung des Elektrodenmaterials 5 ausgebildet.

Die Steuereinheit 3 ist weiterhin dazu ausgebildet, gemäß der erfassten Feuchtigkeitsverteilung die Leistung der Lasertrocknung 4 entsprechend räumlich zu variieren. Mit anderen Worten erfolgt eine von der räumlichen Feuchtigkeitsverteilung abhängige Lasertrocknung 4. Hierbei wird die Leistung eines Lasers der Lasertrocknung 4 entsprechend der erfassten örtlichen Feuchtigkeit eingestellt beziehungsweise angepasst. Typischerweise wird bei einer lokal hohen Feuchtigkeit die dortige Laserleistung durch die Steuereinheit 3 erhöht, während bei einer lokal niedrigeren Feuchtigkeit der Elektrodenbeschichtung 5 die Laserleistung durch die Steuereinheit 3 verringert.

Dadurch wird eine ortsaufgelöste Trocknung bereitgestellt, die auf die räumliche Variation der Feuchtigkeit/Restfeuchtigkeit des Elektrodenmaterials 5 angepasst ist.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Vorrichtung
- 2: Messeinheit
- 3: Steuereinheit
- 4: Lasertrocknungseinheit
- 5: Elektrodenpaste
- 6: Stromsammler
- 42: Laser

## Patentansprüche

1. Vorrichtung (1), umfassend eine Steuereinheit (3) zur Steuerung einer Trocknung eines Elektrodenmaterials (5) einer Batteriezellenherstellung, **dadurch gekennzeichnet, dass** die Steuereinheit (3) dazu ausgebildet ist, eine durch eine Messeinheit (2) erfasste räumliche Feuchtigkeitsverteilung des Elektrodenmaterials (5) zu empfangen, und basierend auf der Feuchtigkeitsverteilung eine zur Trocknung vorgesehene Lasertrocknung (4) derart räumlich variabel zu steuern, dass ihre zur Trocknung vorgesehene Leistung basierend auf der erfassten Feuchtigkeitsverteilung räumlich variiert.

2. Vorrichtung (1) gemäß Anspruch 1, **dadurch gekennzeichnet, dass** diese die Messeinheit (2) zur Erfassung der räumlichen Feuchtigkeitsverteilung des Elektrodenmaterials und die Lasertrocknungseinheit (4) zur räumlich variablen Trocknung des Elektrodenmaterials (5) umfasst.

3. Vorrichtung (1) gemäß Anspruch 2, **dadurch gekennzeichnet, dass** die Messeinheit (2) dazu ausgebildet ist, die räumliche Feuchtigkeitsverteilung gemäß einem zweidimensionalen Raster zu erfassen.

4. Vorrichtung (1) gemäß Anspruch 2 oder 3, **dadurch gekennzeichnet, dass** die Messeinheit (2) dazu ausgebildet ist, die räumliche Feuchtigkeitsverteilung mittels einer Hyperspektralanalyse zu erfassen.

5. Vorrichtung (1) gemäß Anspruch 4, **dadurch gekennzeichnet, dass** die Hyperspektralanalyse wenigstens mehrere Wellenlängen im Infrarotbereich umfasst.

6. Vorrichtung (1) gemäß einem der vorhergehenden Ansprüche, **dadurch gekennzeichnet, dass** diese zur Trocknung einer Elektrodenbeschichtung (5) einer Batteriezellenherstellung, insbesondere zur Trocknung einer Elektrodenpaste, vorgesehen ist.

7. Vorrichtung (1) gemäß einem der vorhergehenden Ansprüche, **dadurch gekennzeichnet, dass** die Wellenlänge eines Lasers (42) der Lasertrocknung (4) in Abhängigkeit des Elektrodenmaterials (5) einstellbar ist.

8. Verfahren zur Trocknung eines Elektrodenmaterials (5) einer Batterieherstellung, **gekennzeichnet dadurch, dass** hierbei eine Vorrichtung (1) gemäß einem der Ansprüche 2 bis 7 verwendet wird, wobei das Verfahren wenigstens die folgenden Schritte umfasst:
- Erfassen einer räumlichen Feuchtigkeitsverteilung des Elektrodenmaterials mittels der Messeinheit (2); und
- Steuern der Lasertrocknung (4) mittels der Steuereinheit (3), wobei das Steuern derart erfolgt, dass die zur Trocknung vorgesehene Lasertrocknung (4) basierend auf der erfassten Feuchtigkeitsverteilung räumlich variiert wird.

9. Verfahren gemäß Anspruch 8, **gekennzeichnet dadurch, dass** die räumliche Feuchtigkeitsverteilung gemäß einem zweidimensionalen Raster erfasst wird.

10. Verfahren gemäß Anspruch 8 oder 9, **gekennzeichnet dadurch, dass** die räumliche Feuchtigkeitsverteilung mittels einer Hyperspektralanalyse erfasst wird.

11. Verfahren gemäß einem der Ansprüche 8 bis 10, **gekennzeichnet dadurch, dass** bei der Hyperspektralanalyse mehrere Wellenlängen im Infrarotbereich verwendet werden.

12. Verfahren gemäß einem der Ansprüche 8 bis 11, **gekennzeichnet dadurch, dass** eine Elektrodenbeschichtung (5), insbesondere eine Elektrodenpaste getrocknet wird.

13. Verfahren gemäß einem der Ansprüche 8 bis 12, **gekennzeichnet dadurch, dass** die Wellenlänge eines Lasers (42) der Lasertrocknung (4) in Abhängigkeit des Elektrodenmaterials (5) eingestellt wird.

14. Verfahren gemäß einem der Ansprüche 8 bis 13, **gekennzeichnet dadurch, dass** vor der Lasertrocknung (4) eine Vortrocknung des Elektrodenmaterials (5) auf eine festgelegte Restfeuchtigkeit erfolgt.

15. Verfahren gemäß einem der Ansprüche 8 bis 14, **gekennzeichnet dadurch, dass** das Erfassen der Feuchtigkeitsverteilung und die anschließende Lasertrocknung (4) mehrfach abwechselnd hintereinander erfolgen.
